# EUROPÄISCHE PATENTSCHRIFT

(11) **EP 4 210 929 B1**
(45) Veröffentlichungstag und Bekanntmachung des Hinweises auf die Patenterteilung: **22.10.2025**
(21) Anmeldenummer: 21777442.1
(22) Anmeldetag: 09.09.2021
(51) Int. Cl.: B29C 65/14, B29C 65/18, B29C 65/30, B65B 51/14

(54) **SIEGELVERFAHREN**
SEALING METHOD
PROCÉDÉ DE SCELLAGE

(30) Priorität: 09.09.2020 DE 102020123565
(43) Veröffentlichungstag der Anmeldung: 19.07.2023
(73) Patentinhaber: watttron GmbH, 01705 Freital (DE)
(72) Erfinder: STEIN, Marcus, 01705 Freital (DE); BACH, Sascha, 01705 Freital (DE)
(74) Vertreter: Lippert Stachow Patentanwälte Rechtsanwälte Partnerschaft mbB
(86) Internationale Anmeldenummer: PCT/EP2021/074849
(87) Internationale Veröffentlichungsnummer: WO 2022/053574

(56) Entgegenhaltungen:
- WO-A1-2018/055034
- DE-A1- 102016 117 834

## Beschreibung

Die Erfindung betrifft Verbesserungen an Siegelverfahren.

Unter dem Begriff "Siegeln" wird hierin das stoffschlüssige Verbinden, insbesondere von Kunststoffen, vorrangig für die Herstellung von Verpackungen aus thermoplastischen Materialien wie Kunststofffolien oder Folienverbunden, wie beispielsweise mit metallischen und nichtmetallischen Werkstoffen beschichtete Kunststofffolien, mit thermoplastischem Kunststoff beschichteten Metallfolien wie Aluminiumfolie und dergleichen, beispielsweise bei der Herstellung von Schlauchbeuteln, dem Verschließen von Behältern, beispielsweise durch das Aufsiegeln von Kunststofffolie mit oder ohne Aluminiumbeschichtung, kunststoffbeschichteter Aluminiumfolie oder anderen thermisch schweißbaren Materialien auf Behälter aus Kunststoff mit oder ohne Beschichtung oder aus Aluminium mit Kunststoffbeschichtung, oder die Versiegelung/Verschweißung von Folien oder Folienverbunden der oben genannten Art.

Beim Siegeln kommen üblicherweise beheizte Siegelwerkzeuge (auch als Siegelorgane bezeichnet) zum Einsatz. Diese bestehen in der Regel aus einer Heizpatrone (gewickelter Widerstandsleiter) und einem Grundkörper, in dem die Heizpatrone sowie ein für die Temperaturregelung erforderlicher Temperaturfühler integriert sind.

WO 2018/055034 A1 beschreibt ein Siegelorgan, bei dem wärmeerzeugende Elemente eines Heizelements von dessen Rückseite her kontaktiert sind. Weitere Aspekte betreffen ein Siegelorgan, bei dem der Ort der Wärmeerzeugung und der Ort der Wärmeabfuhr (d.h. die Wirkstelle) möglichst nah beieinander angeordnet sind, ein Heizelement, das einen integrierten Temperatursensor aufweist, ein Siegelorgan mit der Möglichkeit, das Heizelement und/oder das zu verschweißende Material bedarfsweise zu kühlen oder anzusaugen.

Für Siegelorgane der beschriebenen Art, bei denen eine Vielzahl von Heizelementen bereitgestellt werden, die einzeln oder gruppenweise ansteuerbar sind, und zwar gleichgültig ob die Heizelemente zum Siegeln einer ebenen, gebogenen oder gekrümmten Kontur angeordnet sind, und gleichgültig ob ein Trägerelement ein oder mehrere Heizelemente aufweist, wird ein Siegelverfahren gemäß Anspruch 1 vorgeschlagen, das energiesparend ist, mit höchster Zuverlässigkeit beste Ergebnisse ermöglicht und außerdem eine Inline-Qualitätskontrolle, d.h. eine Überwachung des Siegelvorgangs, während er stattfindet, mit integrierter Fehlererkennung ermöglicht.

Wesentliches Merkmal der Heizelemente der watttron GmbH ist die Aufteilung der Heizfläche in kleinste Einzelregelkreise (Heizpixel, oder im Falle eines Rundheizers Heizkreisstücke), die einzeln in ihrer Temperatur geregelt werden können. Damit wird die Siegelnaht bei einer Beutelsiegelung oder die Heizfläche bei der Thermoformvorwärmplatte in minimale regelbare Fläche unterteilt.

Diese Unterteilung hat den Vorteil, auf lokale unterschiedliche Leistungsbedarfe (z.B. durch Lagensprung der Verpackung oder Randeffekte) gezielt reagieren zu können. Weiterer Vorteil ist die Messbarkeit eben dieser lokal unterschiedlichen Bedarfe, durch Messung der abgegebenen Leistung einer jeden Einzelfläche, bzw. der damit bestimmbaren Energieabgabe (im Falle des Kühlens - aufnahme) über einen gewissen Zeitraum bspw. des Maschinentaktes. Die Idee ist, diese lokalen Informationen aus dem Heizprozess zu überwachen und durch einen Algorithmus zur Überwachung des Prozesses bzw. Inline-Qualitätskontrolle zu nutzen.

Hierzu wird bei einem Siegelorgan der beschriebenen Art, das eine Mehrzahl von Heizelementen aufweist, die einzeln ansteuerbar sind, das Siegelorgan beheizt und auf das zu siegelnde Material gedrückt und, während das Siegeln stattfindet, von jedem Heizelement eine Kenngröße, beispielsweise der Energieverbrauch, gemessen und ausgewertet.

Das "Auswerten" kann in diesem Zusammenhang beispielsweise die Erfassung der Gesamtenergie jedes beteiligten Heizelements und den anschließenden Vergleich des Energieverbrauchs jedes Heizelements mit dem Energieverbrauch aller anderen Heizelemente umfassen. Dies ist insbesondere hilfreich, wenn ein neuer Anwendungsfall vorliegt, bei dem das Verhalten des Materials sowie der Heizelemente zur Erreichung einer ordnungsgemäßen, zuverlässigen Siegelung noch nicht ausreichend bekannt ist. In diesem Fall kann der Vergleich der Heizelemente miteinander einen Hinweis auf ein Qualitätsproblem liefern.

Wird ein bestimmter Anwendungsfall bereits gut beherrscht, so können die erfassten Daten von Kenngrößen oder Kennwerten besonders vorteilhaft dazu genutzt werden, eine Datenbank von Prozessparametern zu erzeugen und anschließend zur Prozesssteuerung zu nutzen. Bevorzugt kommen hierbei selbstlernende Algorithmen ("unsupervised learning") zur Anwendung, die das Verfahren besonders schnell, effizient und genau auch bei bisher unbekannten Anwendungen beherrschbar machen können.

Die Erfassung der gewählten Kenngröße kann beispielsweise über die gesamte Zeit erfolgen, die ein Siegelvorgang dauert, und die Auswertung sich auf den Maximalwert der Kenngröße beschränken, oder die erfasste Kenngröße wird über die Zeit integriert und dadurch ein einzelner Kennwert ermittelt, beispielsweise der Gesamtenergieverbrauch jedes Heizelements pro Siegelvorgang.

Beispiele: Soll beispielsweise ein Deckel aus Aluminiumfolie auf einen Joghurtbecher aus Kunststoff gesiegelt werden und weist das Siegelorgan eine Vielzahl von Heizelementen auf, die einzeln ansteuerbar sind, so wird der Energieverbrauch aller Heizelemente über die Zeit des Siegelvorgangs betrachtet ähnlich sein: Im Energie-Zeit-Schrieb erscheint eine Kurve, die zunächst von nahe Null relativ stark ansteigt, ein Maximum erreicht und dann wieder bis auf nahe Null abfällt. Der qualitative Verlauf der Kurven ist bei allen Heizkreisen relativ ähnlich. Ist die Siegelung erfolgreich und wie gewünscht verlaufen, so stimmen die Kurven auch quantitativ relativ gut überein.

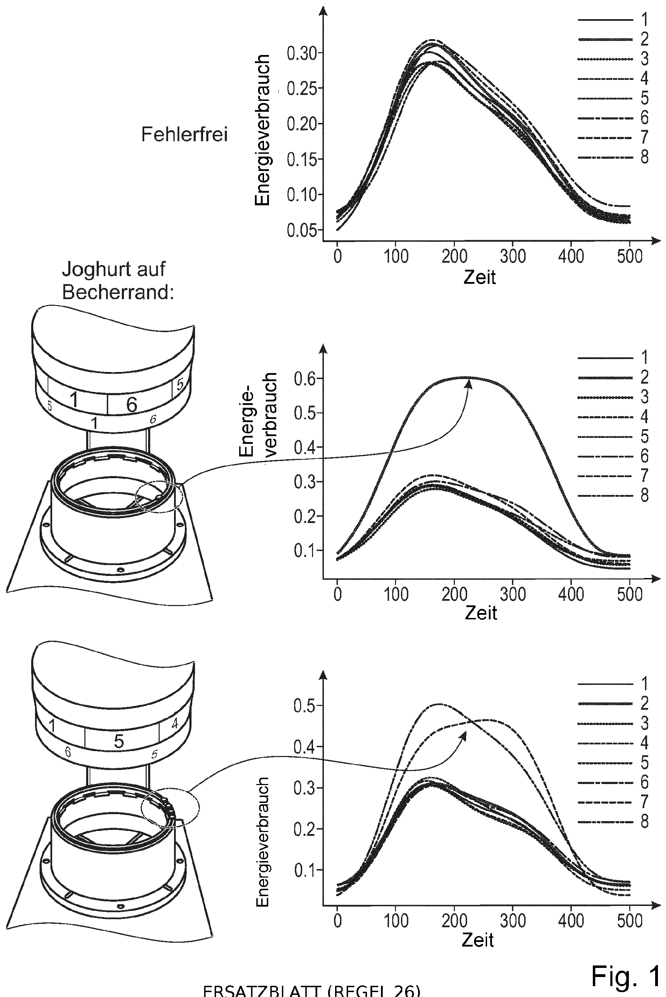

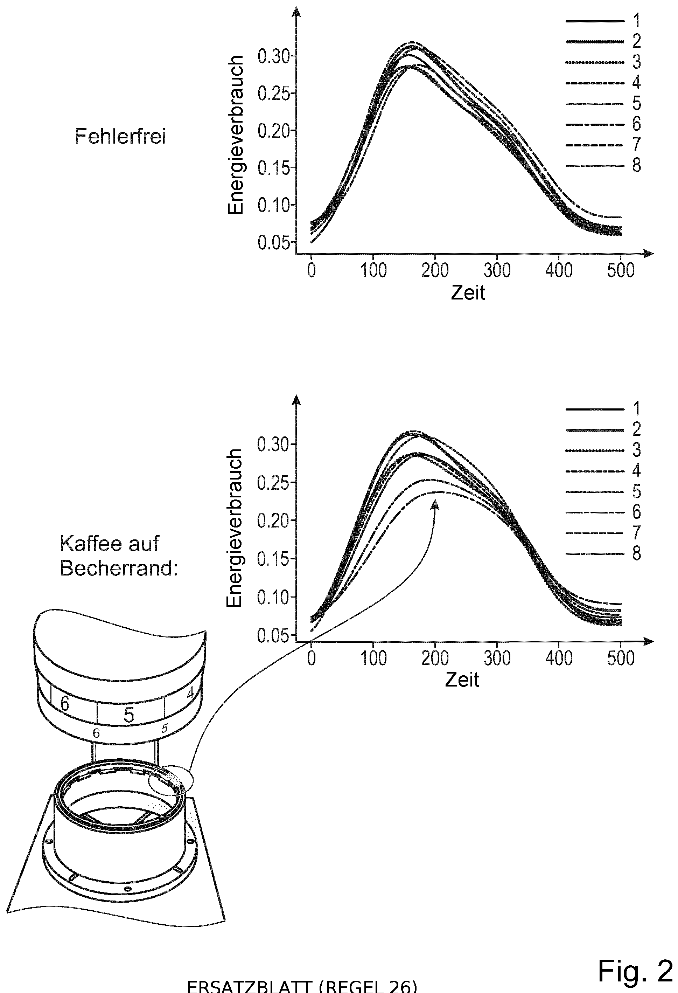

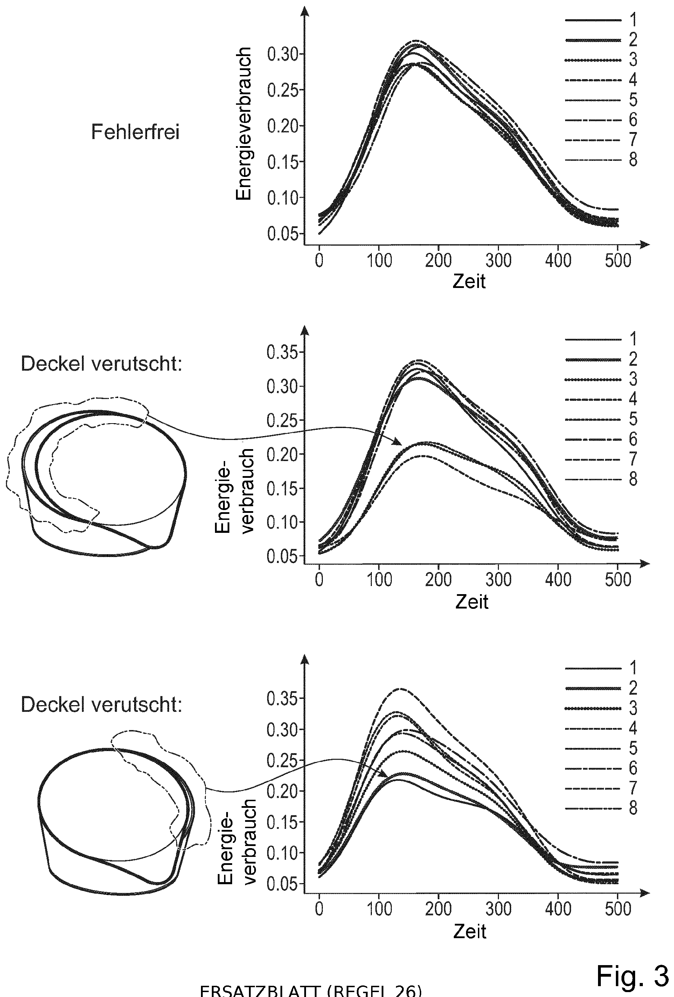

Ist jedoch ein Problem aufgetreten, so erkennt man an den Energie-Zeit-Schrieben zumindest quantitativ einen Unterschied: Beispielsweise kann es vorkommen, dass Tropfen des Joghurts beim Einfüllen in den Becher auf den Becherrand gelangen (Fig. 1). Bei Kaffeekapseln kann in analoger Weise Kaffeepulver auf den Becherrand gelangen (Fig. 2). Außerdem kann ein Fehler darin bestehen, dass der Deckel gegenüber dem Becher verrutscht, d.h. nicht korrekt liegt (Fig. 3). Oder allgemeiner formuliert, zwei miteinander zu verschweißende Werkstücke können relativ zueinander ungenau positioniert sein. In all diesen Fällen bietet das vorgeschlagene Verfahren die Möglichkeit, das Vorliegen eines Fehlers zu erkennen und gezielt einzugreifen, um minderwertige Produkte zu vermeiden oder auszusondern und so die Qualität der Produktion sicherzustellen.

In den genannten Fällen benötigt mindestens ein Heizelement, manchmal auch zwei oder mehr benachbarte Heizelemente, entweder deutlich mehr Energie zum Siegeln, weil der zwischen Becherrand und Deckelfolie befindliche Tropfen Joghurt zusätzliche Energie aufnimmt, bis alle Feuchtigkeit daraus entwichen ist, oder das oder die betroffenen Heizelemente verbrauchen deutlich weniger Energie, weil das Kaffeepulver den Wärmedurchgang behindert oder die Heizelemente nur auf den Becherrand und nicht auf die Deckelfolie einwirken. In jedem dieser Fälle lässt sich aus lokalen Abweichungen der gemessenen Kenngrößen oder Kennwerte ein potentielles Qualitätsproblem erkennen, so dass eine geeignete Aktion durchgeführt werden kann.

Alternativ oder zusätzlich kann von jedem Heizelement auch eine andere Kenngröße, beispielsweise die Temperatur, über die Zeit gemessen und ausgewertet werden. In ähnlicher Weise wie oben beschrieben lässt sich aus dem Vergleich der gemessenen Temperatur-Zeit-Verläufe erkennen, ob und an welcher Stelle es möglicherweise ein Qualitätsproblem gibt.

Ein sich stetig wiederholender thermischer Prozess ist im statischen Fall durch einen gleichbleibenden Leistungsbedarf gekennzeichnet. Entsprechend ist bei längerer Beobachtung ein Erwartungswert mit seinen "normalen" Schwankungsbereich hinsichtlich Leistungsverlauf oder Energiemenge je Zyklus bestimmbar. Ist dieser Erwartungswert je Heizbereich bekannt, sind Abweichungen über den Toleranzbereich hinaus bestimmbar, welche auf Änderung im Prozess zurückschließen lassen.

Neben dem Vergleich zum zeitlichen Verlauf ist auch der lokale Vergleich bei ähnlichen thermischen Bedingungen benachbarter Heizflächen möglich. Beispielsweise zeigen alle Heizkreise entlang einer kreisrunden Siegelkontur den ähnlichen Leistungsbedarf bei sauberem Siegelrand auf. Kommt es zu einer Kontamination in einem Teilbereich des Siegelrandes, ist der betroffene Heizkreis durch den direkten Vergleich mit den anderen Verläufen bzw. Energiewerten der einen Siegelung detektierbar.

Darüber hinaus ist auch eine Analyse über verschiedene Siegelvorgänge möglich. Beispielsweise zeigen Heizkreise mit unterschiedlichen Zieltemperaturen (ein sogenanntes Temperaturprofil) im Vergleich untereinander unterschiedliche Leistungsbedarfe an. Über mehrere Siegelvorgänge hinweg bleibt aber das Leistungsverhalten des einzelnen Heizkreises ähnlich und damit vergleichbar. Eine Kontamination in einem Teilbereich würde dann eine Abweichung des Leistungsbedarfs im Vergleich zu den vorherigen Siegelungen bedeuten.

Eine weitere Ausbaustufe der Nutzung von Leistungsbedarfen oder Energieverbräuchen ist die Wiedererkennung von Fehlerzuständen. Dabei ist es möglich, nicht nur zwischen gut und schlecht zu unterscheiden, sondern auch die Ursache der Störung bzw. Änderung zu bestimmen. Dazu wird der Algorithmus angelernt, in dem ihm der Grund beim erstmaligen Auftreten des Fehlerfalles genannt wird ("supervised learning"). Mit zunehmender Datenlage kann der Algorithmus durch Vergleich der Messdaten mit seinen in einer Datenbank hinterlegten Fehlermasken bzw. dem konfigurierten neuronalen Netz auf Wiederholungen bekannter Fälle schließen und unter Angabe einer Wahrscheinlichkeit den Grund der Störung benennen.

Anwendungen
- Detektion von Verschmutzungen, Kontaminationen und ungewünschten Folienfaltungen im Siegelnahtbereich bei Verpackungsprozessen,
- Detektion von Prozessveränderungen im Verpackungsprozess z.B. das Verrutschen oder Fehlen von Folienmaterial bzw. von gewünschten Faltungen und Lagensprüngen (Längsnaht),
- Detektion von Materialänderungen durch Auswertung des Leistungsverlaufs und damit Rückschluss auf Foliendicke und Wärmekapazität,
- Detektion von Werkzeugveränderungen, z.B. von sich über mehrere Zyklen aufbauende Anhaftung auf der Siegelwerkzeugoberfläche,
- Nutzung der Energieauswertung als zentrale zeitliche Maschinensteuerung anstelle eines definierten prozessunabhängigen Maschinentaktes.

## Patentansprüche

1. Siegelverfahren zum thermischen Verbinden thermoplastischer Materialien entlang einer ebenen, gebogenen oder gewölbten Siegelkontur, bei dem in einer Verpackungsmaschine ein Siegelorgan erhitzt und auf einen zu versiegelnden Bereich, d.h. die Siegelkontur eines Produkts, gedrückt wird, wobei das Siegelorgan eine Mehrzahl von Heizelementen aufweist, die einzeln ansteuerbar sind, **dadurch gekennzeichnet, dass** zur Prozessüberwachung von jedem Heizelement eine Kenngröße wie der Energieverbrauch oder die Temperatur über die Zeit gemessen und ausgewertet wird, und dass die Auswertung der Kenngröße eine Entscheidung umfasst, ob ein Produkt fehlerfrei oder fehlerhaft ist.

2. Siegelverfahren nach Anspruch 1, bei dem die Auswertung der Kenngröße die Erfassung der Gesamtenergie jedes beteiligten Heizelements und den anschließenden Vergleich des Energieverbrauchs jedes Heizelements mit dem Energieverbrauch aller anderen Heizelemente umfasst.

3. Siegelverfahren nach Anspruch 1 oder 2, bei dem die Auswertung der Kenngröße die Erfassung der Maximaltemperatur jedes beteiligten Heizelements und den anschließenden Vergleich der Maximaltemperatur jedes Heizelements mit der Maximaltemperatur aller anderen Heizelemente umfasst.

4. Siegelverfahren nach einem der Ansprüche 1 bis 3, bei dem die erfassten Daten von Kenngrößen jedes Produkts sowie die Entscheidung, ob ein Produkt fehlerfrei oder fehlerhaft ist, gespeichert werden.

5. Siegelverfahren nach einem der Ansprüche 1 bis 4, bei dem die erfassten Daten von Kenngrößen dazu genutzt werden, eine Datenbank von Prozessparametern zu erzeugen und anschließend zur Prozesssteuerung zu nutzen.

6. Siegelverfahren nach einem der Ansprüche 1 bis 5, bei dem die Prozesssteuerung die Erkennung fehlerhafter Produkte sowie deren Ausschleusung aus dem Prozess umfasst.

7. Siegelverfahren nach einem der Ansprüche 1 bis 6, bei dem die Prozesssteuerung die Länge eines Arbeitstakts der Verpackungsmaschine aus den erfassten Daten von Kenngrößen ständig neu ermittelt.

## Claims

1. A sealing method for thermally bonding thermoplastic materials along a planar, bent or curved sealing contour, wherein in a packaging machine a sealing member is heated and pressed onto a region to be sealed, i.e. the sealing contour of a product, wherein the sealing member has a plurality of heating elements, which are individually controllable, **characterized in that**, for processing monitoring purposes, from each heating element a characteristic variable such as the energy consumption or the temperature over time is measured and evaluated, and **in that** the evaluation of the characteristic variable comprises a decision as to whether a product is fault-free or faulty.

2. The sealing method as claimed in claim 1, wherein the evaluation of the characteristic variable comprises the acquisition of the total energy of each heating element involved and the subsequent comparison of the energy consumption of each heating element with the energy consumption of all other heating elements.

3. The sealing method as claimed in claim 1 or 2, wherein the evaluation of the characteristic variable comprises the acquisition of the maximum temperature of each heating element involved and the subsequent comparison of the maximum temperature of each heating element with the maximum temperature of all other heating elements.

4. The sealing method as claimed in any of claims 1 to 3, wherein the acquired data from characteristic variables of each product and also the decision as to whether a product is fault-free or faulty are stored.

5. The sealing method as claimed in any of claims 1 to 4, wherein the acquired data from characteristic variables are used to generate a database of process parameters and subsequently to use it for process control.

6. The sealing method as claimed in any of claims 1 to 5, wherein the process control comprises the recognition of faulty products and the removal thereof from the process.

7. The sealing method as claimed in any of claims 1 to 6, wherein the process control constantly determines anew the length of a work cycle of the packaging machine from the acquired data from characteristic variables.

## Revendications

1. Procédé de scellage pour lier thermiquement des matériaux thermoplastiques le long d'un contour de scellage plan, coudé ou courbé, dans lequel, dans une machine d'emballage, un élément de scellage est chauffé et pressé sur une zone à sceller, c'est-à-dire le contour de scellage d'un produit, l'élément de scellage comportant plusieurs éléments chauffants pouvant être commandés individuellement, **caractérisée en ce que**, à des fins de surveillance du processus, une variable caractéristique telle que la consommation d'énergie ou la température en fonction du temps est mesurée et évaluée pour chaque élément chauffant, et **en ce que** l'évaluation de la variable caractéristique comprend une décision quant à savoir si un produit est exempt de défauts ou défectueux.

2. Procédé de scellage selon la revendication 1, dans lequel l'évaluation de la variable caractéristique comprend l'acquisition de l'énergie totale de chaque élément chauffant concerné et la comparaison ultérieure de la consommation d'énergie de chaque élément chauffant avec la consommation d'énergie de tous les autres éléments chauffants.

3. Procédé de scellage selon la revendication 1 ou 2, dans lequel l'évaluation de la variable caractéristique comprend l'acquisition de la température maximale de chaque élément chauffant concerné et la comparaison ultérieure de la température maximale de chaque élément chauffant avec la température maximale de tous les autres éléments chauffants.

4. Procédé de scellage selon l'une des revendications 1 à 3, dans lequel les données acquises à partir des variables caractéristiques de chaque produit ainsi que la décision quant à savoir si un produit est exempt de défauts ou défectueux sont enregistrées.

5. Procédé de scellage selon l'une des revendications 1 à 4, dans lequel les données acquises à partir des variables caractéristiques sont utilisées pour générer une base de données de paramètres de processus et pour l'utiliser ensuite pour le contrôle du processus.

6. Procédé de scellage selon l'une des revendications 1 à 5, dans lequel le contrôle du processus comprend la reconnaissance des produits défectueux et leur élimination du processus.

7. Procédé de scellage selon l'une des revendications 1 à 6, dans lequel le contrôle du processus détermine en permanence la durée d'un cycle de travail de la machine d'emballage à partir des données acquises à partir des variables caractéristiques.
